(19) Europäisches Patentamt
European Patent Office
Office européen des brevets

(11) **EP 3 185 468 B1**

(12) **FASCICULE DE BREVET EUROPEEN**

(45) Date de publication et mention
de la délivrance du brevet:
**25.09.2019 Bulletin 2019/39**

(51) Int Cl.:
**H04L 9/32** *(2006.01)*       **H04L 9/08** *(2006.01)*
**H04L 29/06** *(2006.01)*       **H04W 12/02** *(2009.01)*

(21) Numéro de dépôt: **16205913.3**

(22) Date de dépôt: **21.12.2016**

(54) **PROCÉDÉ DE TRANSMISSION DE DONNÉES, PROCÉDÉ DE RÉCEPTION DE DONNÉES, DISPOSITIFS ET PROGRAMMES CORRESPONDANTS**

DATENÜBERTRAGUNGSVERFAHREN, DATENEMPFANGSVERFAHREN, ENTSPRECHENDE VORRICHTUNGEN UND PROGRAMME

DATA-TRANSMISSION METHOD, DATA-RECEIVING METHOD, CORRESPONDING DEVICES AND PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2015 FR 1563338**

(43) Date de publication de la demande:
**28.06.2017 Bulletin 2017/26**

(73) Titulaire: **INGENICO GROUP**
**75015 Paris (FR)**

(72) Inventeurs:
• **NACCACHE, David**
**75016 Paris (FR)**
• **GERAUD, Rémi**
**92160 Anthony (FR)**
• **BEUNARDEAU, Marc**
**75015 Paris (FR)**

(74) Mandataire: **Vidon Brevets & Stratégie**
**16B, rue de Jouanet**
**BP 90333**
**35703 Rennes Cedex 7 (FR)**

(56) Documents cités:
**US-A- 5 852 665       US-A1- 2010 293 097**
**US-B1- 9 003 200**

**Description**

**1. Domaine de l'invention**

L'invention se rapporte au domaine des réseaux de communication. La technique se rapporte plus particulièrement à la transmission de données dans des réseaux de communication sans fil. La technique se rapporte encore plus spécifiquement à la sécurisation de la transmission de données dans des réseaux de communication sans fils économes en énergie. D'une manière générale, une telle sécurisation s'opère par la transmission de données chiffrées. La présente technique porte ainsi sur la transmission de données chiffrées dans un réseau de communication économe en énergie et dont les dispositifs de communications disposent de quantité de mémoire limitée.

**2. Art Antérieur**

Lorsqu'il est nécessaire de protéger des données qui sont transmises par l'intermédiaire d'un réseau de communication, des techniques de chiffrement de données sont utilisées. Il existe de nombreuses techniques de chiffrement de données. Celles-ci peuvent être scindées en deux classes générales : le chiffrement symétrique, dans lequel les parties qui communiquent ont chacune connaissance d'une clé qui est utilisée à la fois pour chiffrer et déchiffrer les données; et le chiffrement asymétrique, basé sur une paire de clés : une clé publique et une clé privée. Ces deux classes de technique de chiffrement sont utilisées pour résoudre des problèmes de chiffrement de données particuliers. Par exemple le chiffrement symétrique est adapté à la sauvegarde sécurisée de données. En effet, les données n'étant pas destinées à être transmises à un tiers, il est plus simple de disposer d'une unique clé pour chiffrer celles-ci, ladite clé étant conservée par l'utilisateur afin de pouvoir avoir à nouveau accès à ses données. A l'inverse, lorsqu'il s'agit d'échanger des données, au travers d'un réseau de communication, l'utilisation d'un chiffrement symétrique est préférable. Par exemple, au cours d'une session de communication, deux entités souhaitant communiquer générèrent deux paires de clés privées/publiques. Ces deux paires de clés sont utilisées pour chiffrer et déchiffrer les données avant et après leur transmission.

La cryptographie symétrique est utilisée à grande échelle car elle est capable de fournir des fonctionnalités importantes comme le chiffrement à haut débit et à bas coût, l'authentification de messages et le hachage efficace. On parle par exemple de chiffrement authentifié, conçu pour fournir à la fois la confidentialité des données mais également l'intégrité et l'authenticité de celles-ci. Ainsi, les algorithmes de chiffrement symétriques sont utilisés dans les téléphones mobiles, les cartes de crédit, les connexions sans fil. Ces fonctionnalités reposent sur l'emploi de primitives cryptographiques telles que le chiffrement par bloc, le chiffrement à flot ou les fonctions de hachage. Le chiffrement par bloc est une technique sûre et efficace : des algorithmes conçus depuis une décennie résistent toujours à toute tentative d'attaque dans un contexte classique. Ainsi, la résistance aux attaques statistiques de l'algorithme AES (primitive symétrique très utilisée) a été prouvée. L'algorithme AES offre des performances suffisantes pour un large éventail de contextes d'emploi.

Une primitive symétrique telle qu'AES est considérée comme sûre dans les modèles de sécurité classiques lorsqu'il est difficile de distinguer ses sorties de chaînes aléatoires. Mais, dans de nombreuses applications, la cryptographie est utilisée dans un contexte où les attaquants ont accès à des canaux d'information dits auxiliaires, qui ne sont pas couverts dans les modèles de sécurité classiques. Par exemple, une implémentation d'un système de télévision à péage doit se protéger contre un attaquant ayant un accès physique à l'équipement et peut mesurer certaines grandeurs physiques au cours du calcul afin de retrouver la clé. Dans des cas extrêmes, l'attaquant peut même avoir la capacité de lire la mémoire et d'en extraire les clés. De telles attaques sont appelées attaque par canaux cachés.

Dans de tels contextes, de nombreuses implémentations sont vulnérables à des attaques pratiques par canaux cachés. Par ailleurs, la conception d'un algorithme de chiffrement par bloc se limite à la définition d'une permutation paramétrée par une clé. Ils sont souvent utilisés pour protéger la confidentialité ou l'intégrité d'une donnée, ils doivent pour cela être composés selon un mode opératoire approprié. Ainsi, la plupart des applications visant à protéger la confidentialité d'une donnée nécessitent également la protection de son intégrité. Cette situation entraîne un besoin fort de modes opératoires efficaces combinant ces deux propriétés. Les documents US2010/0293097 A1 et US5852665 divulguent des exemples de telles combinaisons de confidentialité et d'intégrité.

Par ailleurs, la situation est encore complexifiée par l'apparition de nouveaux besoins et de nouvelles applications. En effet, les implémentations existantes sont adaptées à certains types de dispositifs : il s'agit de dispositifs qui disposent de ressources importantes, tant en termes de puissance de calcul qu'en termes de mémoire. En effet, les terminaux de communication actuels tels que les smartphones ou les tablettes n'ont rien à envier aux ordinateurs personnels ou portables. En revanche, les implémentations existantes ne sont pas adaptées aux dispositifs utilisant des réseaux peu gourmand en énergie : il s'agit par exemple des objets connectés, qui utilisent des réseaux de communication peu gourmand en énergie, de type LORA. Dans ce type de réseau de communication, il est nécessaire de ne pas surutiliser les ressources nécessaires afin de garantir une longévité importante des dispositifs (pour ne pas trop utiliser les ressources, par exemple la batterie). En effet, l'une des caractéristiques des objets dits connectés est de fonctionner sur batterie. Or, la fonction qui utilise le plus cette batterie est la fonction de communication (réception et transmission de données). Ainsi, les implémentations actuelles, qui utilisent beaucoup de ressources pour les calculs cryptographiques et beaucoup de ressources pour la transmission/réception de données ne sont pas adaptées à l'internet des objets.

Il existe donc un besoin de fournir une telle implémentation.

## 3. Résumé de l'invention

L'invention ne pose pas ces problèmes de l'art antérieur. Plus particulièrement, l'invention apporte une solution simple à la problématique préalablement identifiée. En effet, la présente technique porte sur un procédé de transmission de données, procédé du type consistant à chiffrer et à authentifier une donnée.

Ainsi, la présente technique se rapporte à un procédé de transmission de données, procédé mis en oeuvre par un premier dispositif électronique, dit émetteur, à destination d'un deuxième dispositif électronique dit récepteur, procédé comprenant la transmission d'un message découpé en blocs de données procédé caractérisé en ce qu'il comprend au moins une itération d'une étape de traitement comprenant :

- obtention d'un bloc de données courant ;
- chiffrement dudit bloc de données courant à l'aide d'une clé de chiffrement, délivrant un bloc de données chiffrées;
- détermination d'un tag de longueur aléatoire ou pseudo-aléatoire en fonction dudit bloc de données chiffrées, la longueur du tag étant obtenue par la mise en oeuvre d'une fonction secrète basée sur la clé de chiffrement ;
- transmission dudit bloc de données chiffrées ;

et il comprend au moins une étape de transmission d'au moins un tag selon un schéma de transmission prédéterminé.
Ainsi, la présente technique permet de diffuser des valeurs de contrôle tout au long de la transmission des données chiffrées. Cela permet d'éviter à un récepteur de télécharger l'ensemble du message transmis lorsqu'une erreur est détectée.

Selon une caractéristique particulière l'étape de transmission d'au moins un tag est effectuée à chaque itération de l'étape de traitement.

Selon une caractéristique particulière, la taille dudit tag bi est comprise entre 1 bit et 8 bits.

Selon une caractéristique particulière ledit procédé de transmission comprend, précédemment à l'étape de traitement, une étape d'obtention de la clé de chiffrement k, dite clé de session.

Selon un autre aspect, la présente technique se rapporte également à un dispositif électronique de transmission de données, dit émetteur, comprenant des moyens de transmission de données à destination d'un deuxième dispositif électronique dit récepteur, dispositif comprenant des moyens de transmission d'un message découpé en blocs de données. Un tel dispositif comprend des moyens de traitement itératifs comprenant :

- des moyens d'obtention d'un bloc de données courant;
- des moyens de chiffrement dudit bloc de données courant à l'aide d'une clé de chiffrement, délivrant un bloc de données chiffrées;
- des moyens de détermination d'un tag $b_i$ de longueur aléatoire ou pseudo-aléatoire en fonction dudit bloc de données chiffrées, la longueur du tag étant obtenue par la mise en oeuvre d'une fonction secrète basée sur la clé de chiffrement ;
- des moyens de transmission dudit bloc de données chiffrées ;

et il comprend des moyens de transmission d'au moins un tag $b_i$ selon un schéma de transmission prédéterminé.

Selon un autre aspect, la présente technique se rapporte également à un procédé de réception de données, en provenance d'un dispositif de transmission. Ainsi, la technique se rapporte à un procédé de réception de données, représentatives d'un message découpé en blocs de données, procédé mis en oeuvre par un dispositif électronique dit dispositif récepteur. Un tel procédé comprend, au moins une itération des étapes suivantes :

- une étape de réception d'un bloc de données chiffrées à l'aide d'une clé de chiffrement ;

- une étape de réception d'un tag $b_i$ correspondant à une signature dudit bloc de données chiffrées, ledit tag ayant une longueur aléatoire ou pseudo-aléatoire obtenue par la mise en oeuvre d'une fonction secrète basée sur la clé de chiffrement ;

- une étape de vérification d'une validité dudit tag reçu au regard d'un tag attendu ; et

- lorsque ledit tag reçu est différent dudit tag attendu, une étape de traitement différentiel d'au moins un bloc de données chiffrées valide précédemment reçu.

Selon un mode de réalisation particulier, ladite étape de réception d'un bloc de données chiffrées comprend une étape d'insertion dudit bloc de données chiffrées dans une première file d'attente de taille prédéterminée.

Selon un mode de réalisation particulier, ladite étape de traitement différentiel d'au moins un bloc de données chiffrées valide précédemment reçu comprend :

- une étape de détermination d'un emplacement d'invalidation, au sein d'une deuxième fille d'attente ;

- au moins une étape de traitement des données insérées dans la deuxième fille d'attente jusqu'à l'emplacement d'invalidation ;
- une étape d'arrêt du traitement.

Selon un autre aspect, la présente technique se rapporte également à un Dispositif électronique de réception de données lesdites données étant représentatives d'un message découpé en blocs de données, procédé mis en oeuvre par un dispositif électronique dit dispositif récepteur. Un tel dispositif comprend des moyens de traitement itératifs comprenant :

- des moyens de réception d'un bloc de données chiffrées, correspondant à un bloc de données du message chiffré à l'aide d'une clé de chiffrement ;
- des moyens de réception d'un tag $b_i$ correspondant à une signature dudit bloc de données chiffrées, ledit tag ayant une longueur aléatoire ou pseudo-aléatoire obtenue par la mise en oeuvre d'une fonction secrète basée sur la clé de chiffrement ;
- des moyens de vérification d'une validité dudit tag reçu au regard d'un tag attendu ; et
- des moyens de traitement différentiel d'au moins un bloc de données chiffrées valide précédemment reçu, mis en oeuvre lorsque ledit tag reçu est différent dudit tag attendu.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un dispositif selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

**4. Dessins**

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique de la technique proposée pour la transmission de données ;
- la figure 2 présente un synoptique de la technique proposée pour la réception de données ;
- la figure 3 décrit un mode de réalisation d'une technique de traitement différentiel de données, dans le récepteur ;

- la figure 4 décrit sommairement l'architecture d'un dispositif électronique de transmission ;
- la figure 5 décrit sommairement l'architecture d'un dispositif électronique de réception.

## 5. Description

### 5.1. Rappel du principe général

Le chiffrement authentifié est une approche permettant la mise en oeuvre d'une confidentialité des données échangées et d'une assurance de l'intégrité de ces données en même temps. Le chiffrement authentifié s'oppose au chiffrement d'une part et à la génération de codes d'authentification de massages (MAC) d'autre part.

Le chiffrement authentifié produit généralement des messages de la forme

*C / B*

Où *C* est un message chiffré et *B* est une balise (encore appelé tag). La balise B est calculée, selon les modes de réalisation, soit sur le message chiffré, soit sur le message déchiffré (message en clair). Un inconvénient de cette approche est que le message complet C doit être reçu (et enregistré) avant que la balise B ne puisse être vérifiée. Si il se trouve que le message chiffré C est incorrect (c'est à dire que la balise reçue ne correspond pas à une balise attendue -calculée par le récepteur-), l'étape de réception a été mise en oeuvre pour rien, ce qui a entrainé une perte importante de ressources pour le récepteur (temps passé, énergie utilisée, bande passante consommée, mémoire vive utilisée). Cette approche n'est clairement pas appropriée aux réseaux de communication à basse consommation ni aux dispositifs disposant de peu de capacités de traitement (mémoire vive disponible notamment).

Ainsi, pour pallier les problèmes connus de l'art antérieur, on décrit par la suite un nouveau procédé de chiffrement authentifié, à la volée, procédé qui comprend une latence constante et dont la sécurité est prouvée par rapport à un modèle d'attaquant dont on considère qu'il a un accès complet à l'information relative au comportement du système de réception.

Le principe général de la technique décrite consiste à calculer des tags représentatifs de signatures des blocs de données et à essaimer des tags tout au long de la transmission de ces blocs de données chiffrées, de l'émetteur vers le récepteur. Ainsi, cet essaimage permet au récepteur de constater plus rapidement qu'un bloc de données ne correspond pas à un bloc de données attendu et donc de ne pas avoir à stocker le message C dans son intégralité avant de le traiter. On économise ainsi une grande quantité de mémoire vive et on limite l'usage de la bande passante du réseau. En d'autres termes, l'invention se rapporte à un procédé de transmission de données et à un procédé de réception de données correspondant. Selon l'invention, le procédé de transmission de données effectue un traitement cryptographique sur les données à transmettre, après que ces données aient été prédécoupées en blocs de données, et il calcule un tag représentatif de chaque bloc de données chiffrées. Le tag est ensuite transmis de manière à ce qu'un attaquant ne soit pas en mesure de reproduire une transmission correcte de tags. Le procédé de réception, de son côté, s'assure que lorsqu'un tag incorrect est reçu (du fait d'une tentative d'attaque), le traitement des blocs de données ne soit pas immédiatement stoppé, mais qu'un traitement différentiel soit mis en oeuvre afin de brouiller une tentative d'analyse du comportement du récepteur.

On effectue donc un brouillage tant au niveau de l'émetteur, qui transmet les tags d'une manière telle qu'elles sont difficilement interprétables par l'attaquant (à cause de la taille des données, leur fréquence de transmission ou leur emplacement dans la transmission), qu'au bniveau du récepteur, qui traite ces données de manière différentielle, c'est-à-dire que la réception d'une donnée frauduleuse (que l'on suppose être forgée par l'attaquant) n'entraine pas nécessairement une interruption immédiate de traitement (qui donnerai à l'attaquant un indice sur l'endroit où son attaque a échoué).

D'autres caractéristiques de la présente technique consistent en :

- un mécanisme de détection de valeur à usage unique (nonce) qui empêche la réutilisation de ces valeurs dans l'objectif de construire une attaque par rejeu. et
- un mécanisme de prise en compte des données reçues différentiel : ce mécanisme construit une résistance contre l'attaquant ;

  ∘ par exemple, le traitement différentiel des données reçues peut consister en un mécanisme de temps d'arrêt variable qui limite la fuite d'informations en cas d'erreur ;
  ∘ un autre exemple de traitement différentiel consiste à continuer à accepter la réception des données que l'on sait être fausses : on effectue alors des traitements aléatoires sur ces données, ces traitements comprenant à la fois des étapes de traitement réel et des étapes de traitement aléatoires.

La construction globale du procédé est conçue pour les dispositifs émetteurs et récepteurs disposant de faible capacités de calcul tout en limitant les échanges sur les réseaux de communication (IdO / 5G / Big Data).

Le principe général de la technique consiste ainsi à disperser (essaimer) des balises dans le message chiffré lui-même, afin que l'authentification des données reçues puisse être réalisée à la volée. Si une erreur se produit, le reste du message peut être abandonné. Formellement, un message, transmis par l'émetteur et reçu par le récepteur, a la forme suivante :

$$C_1 \mid b_1 \mid C_2 \mid b_2 \mid \cdots \mid C_n \mid b_n$$

où $C_i$ sont des blocs de texte chiffré et les $b_i$ sont des balises courtes (dont la taille est comprise entre 1 et 8 bits). Il s'agit d'un schéma de transmission des tag uniforme : un tag $b_i$ est transmis après chaque bloc de données. D'autres schémas de transmission des tags sont décrits par la suite. Selon une variante, un $b_i$ est un unique bit, dont la valeur peut être 0 ou 1. On suppose qu'une clé partagée *k* a été précédemment été construite ou déterminée entre l'émetteur et le récepteur. Comme cela est présenté par la suite, l'emplacement, la fréquence et la valeur des $b_i$ qui sont dispersés dans le message au fur et à mesure de sa transmission sont choisis pour rendre la tâche d'un attaquant très complexe.

Le modèle d'attaquant, justement, est volontairement choisi comme étant plus fort et averti que les modèles traditionnellement considérés. On suppose que l'attaquant peut écouter, insérer, modifier ou réorganiser les paquets transmis à le récepteur, et qu'il peut observer le comportement du destinataire afin de déterminer si ces changements ont un effet sur l'arrêt ou la poursuite de la réception des données (et la poursuite des traitements sous-jacent à la réception de ces données) : il s'agit d'attaque de malléabilité. Par exemple, l'attaquant peut essayer de transmettre un flux vidéo à sa victime, et est en mesure de constater un échec de cette transmission lorsque la vidéo s'arrête. A l'aide de ce modèle, on tient à s'assurer qu'aucun bloc de données malveillant ne peut être forgé. Cette assurance est fournie avec une probabilité importante.

Selon la présente technique, pour résister aux attaques de malléabilité, il est nécessaire que la valeur d'un bi donné dépende de tous les blocs ($C_1$, ..., $C_i$) précédemment transmis,
à savoir :

$$b_i = Fk \left( H \left( C_1 \mid \cdots \mid C_i \right) \right)$$

où H est une fonction de hachage et Fk une PRF *("Pseudo Random Function Family")*. En cryptographie, une famille de fonction pseudo-aléatoire, abrégé *PRF,* est une collection de fonctions efficacement calculables qui émulent un oracle aléatoire de la façon suivante : aucun algorithme efficace ne peut distinguer (avec avantage significatif) entre une fonction choisie au hasard parmi la famille PRF et un oracle aléatoire (une fonction dont les sorties sont fixés complètement au hasard).

A lui seul, un tel mode de transmissions de données est déjà en mesure de faire obstacle à une attaque standard, attaque qui ne prend pas en compte les échanges déjà réalisés précédemment.

Cependant, compte tenu du modèle d'adversaire retenu, un tel mode de transmission peut être attaqué par un attaquant au comportement actif, comme suit: lorsque l'attaquant observe que le message malveillant qu'il tente de transmettre est rejeté à un endroit *"i"*, ce qui signifie que le tag $b_i$ est incorrect. Il suffit alors à l'attaquant de tenter la transmission d'un nouveau $b_i$ de de renvoyer tout le message. Il est ainsi théoriquement possible de trouver le bi correct (c'est à dire la valeur de $b_i$ correcte) pour tous les *"i"* successifs.

Or, un des objectifs de la présente technique est justement de pouvoir résister à un tel comportement de l'adversaire, dans au moins un mode de réalisation. Ainsi, il est décrit, dans le mode de réalisation qui suit, une technique permettant de conserver le niveau de sécurisation fournit par la présente technique, même en présence d'un adversaire disposant d'un accès au récepteur, accès qui permet de déterminer le comportement du récepteur.

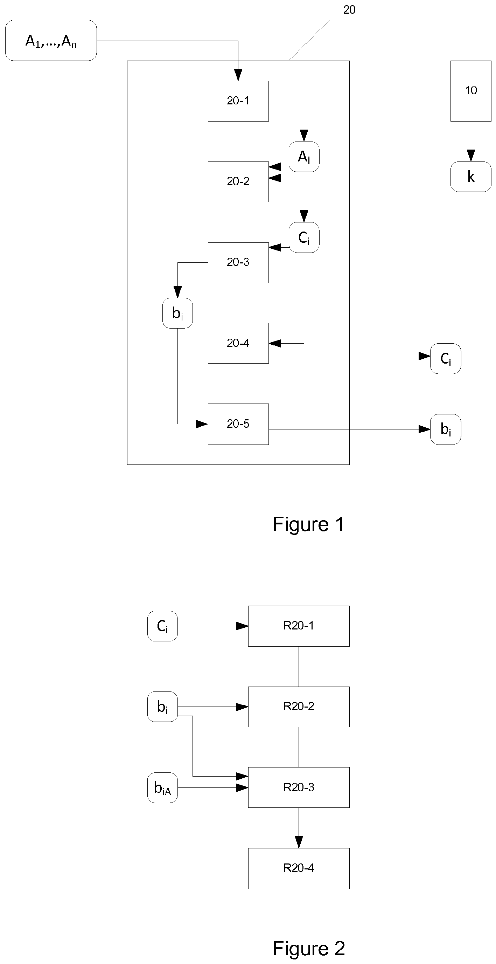

Le principe général de la présente technique comprend un procédé de transmission de donnée d'une part (figure 1) et un procédé de réception de données d'autre part (figure 2).

Ainsi, il est proposé un procédé de transmission de données, procédé mis en oeuvre par un premier dispositif électronique, dit émetteur, à destination d'un deuxième dispositif électronique dit récepteur, procédé comprenant la transmission d'un message découpé en blocs de données ($A_1$,...,$A_n$). Le procédé de transmission comprend au moins une itération d'une étape de traitement (20) comprenant :

- obtention (20-1) d'un bloc de données courant $A_i$;
- chiffrement (20-2) dudit bloc de données courant $A_i$, délivrant un bloc de données chiffrées $C_i$;
- détermination (20-3) d'un tag $b_i$ en fonction dudit bloc de données chiffrées $C_i$;
- transmission (20-4) dudit bloc de données chiffrées $C_i$;
  et en ce qu'il comprend au moins une étape de transmission d'au moins un tag $b_i$ selon un schéma de transmission prédéterminé.

Le schéma de transmission prédéterminé consiste à transmettre le tag d'une manière telle que l'attaquant a des difficultés à comprendre d'une part quand un tag est transmis et quand il ne l'est pas et d'autre part à connaitre la valeur que ce tag devrait avoir. Par ailleurs, on choisit délibérément une taille de tag adaptée. Plus particulièrement, la taille du tag est comprise entre 1 et 8 bit, ce qui rend le tag d'une part peut consommateur en bande passante et aisé à générer. Le schéma de transmission prédéterminé, selon la présente technique, est un schéma de transmission des tag qui a pour conséquence de faire varier la transmission des tag en temps et/ou en fréquence et/ou en longueur (de tags). En d'autres termes, l'attaquant ne sait pas (ou en tout cas ne peut pas être sur) comment les tags sont transmis : parce que par exemple les tags sont transmis de manière régulière (après chaque bloc de données), mais qu'ils ont à chaque fois une taille aléatoire et/ou que les tags sont transmis par blocs, après un certain nombre de blocs de données (transmission par bloc qui est également déterminée aléatoirement) et/ou que seul un tag est transmis tous les x blocs et que ce tag correspond à celui des x blocs à la fois. On a donc potentiellement une variation en temps, en fréquence et en longueur et cette variation est prédéterminée et elle se base sur une détermination aléatoire et/ou pseudo aléatoire du côté de l'émetteur. Le récepteur, de par une synchronisation préalable ou par l'utilisation de fonctions identiques à celles de l'émetteur, est également en mesure de savoir quelles sont les variations utilisées par l'émetteur et donc d'avoir connaissance du schéma de transmission prédéterminé.

Il est également décrit un procédé de réception de données, représentatives d'un message découpé en blocs de données $(A_1,...,A_n)$, procédé mis en oeuvre par un dispositif électronique dit dispositif récepteur. Un tel procédé comprend au moins une itération des étapes suivantes :

- une étape de réception (R20-1) d'un bloc de données chiffrées $C_i$ ;
- une étape de réception (R20-2) d'un tag $b_i$ correspondant à une signature dudit bloc de données chiffrées $C_i$ ;
- une étape de vérification (R20-3) d'une validité dudit tag $b_i$ reçu au regard d'un tag $b_{iA}$ attendu ; et
- lorsque ledit tag $b_i$ reçu est différent dudit tag $b_{iA}$ attendu, une étape de traitement différentiel (R20-4) d'au moins un bloc de données chiffrées valide précédemment reçu.

Le traitement différentiel consiste à ne pas stopper immédiatement le traitement des données reçues, afin de faire croire à l'attaquant que les données (que le dispositif récepteur sait être erronées) ont en réalité été considérées comme valide. Le fait de continuer à traiter les données reçues, comme si elles étaient valides, peut être effectuée de différentes manières.

Un cas d'usage typique de la présente technique est la mise en oeuvre d'une transmission de données unidirectionnelle, d'une entité émettrice, comme par exemple un objet connecté, vers une entité réceptrice, comme par exemple un point d'accès ou une passerelle LORA. Un autre cas d'usage est inverse : il s'agit d'une entité émettrice de type point d'accès ou une passerelle LORA qui transmet des données à un objet connecté. La présente technique trouve également à s'appliquer dans un réseau cellulaire de type UNB (de l'anglais pour « Ultra Narrow Band »).

L'invention, cependant, n'est nullement limitée à une telle mise en oeuvre et peut s'appliquer à tout type de transmission de données sécurisée, par exemple dans la cadre d'un échange de données entre deux ordinateurs connectés à un réseau de communication (qu'il soit filaire ou sans fils) ou entre un terminal et un serveur.

## 5.2. Description d'un mode de réalisation

Dans ce mode de réalisation, on décrit plus explicitement la technique précédemment exposée, en supposant que l'adversaire est en mesure d'interagir avec le récepteur de manière avancée. On suppose notamment que l'adversaire est en mesure de réémettre des blocs de données et des tags lorsqu'il constate qu'un tag donné ne permet pas de valider un bloc qu'il a précédemment transmis. Pour éviter cette problématique, dans ce mode de réalisation, on met en oeuvre deux techniques, de manière complémentaire.

La première technique mise en oeuvre consiste en l'utilisation d'un paramètre utilisé pour calculé les tags (le nonce, qui peut être transmis en clair, et n'est donc pas a priori un secret) pour chaque session de communication de l'émetteur vers le récepteur (pour chaque transmission de message). L'utilisation d'un nonce différent à chaque session de communication permet d'assurer, au récepteur, une capacité de détection de réutilisation d'un nonce précédent. Ainsi le calcul des tags change à chaque session, empêchant un attaquant de « rejouer » des blocs de données qu'il aurait pu intercepter et manipuler précédemment. Cette capacité de détection permet, au récepteur, de détecter une tentative d'usurpation de manière rapide. Comme cela est détaillé par la suite, le mécanisme de détection mis en oeuvre au niveau du récepteur n'est pas consommateur d'énergie et ne nécessite pas de communication bidirectionnelle.

La deuxième technique, mise en oeuvre conjointement à la première, est d'introduire une incertitude, du côté du récepteur, sur le moment où un tag $b_i$ est considéré comme faux. Cette technique, combinée à la première, permet de désorienter l'attaquant. En effet, celui-ci n'est plus à même, même en observant de manière attentive le fonctionnement du récepteur, de déterminer quelles sont les données transmises qui ont causé l'arrêt de la réception des données par le récepteur.

En d'autres termes, l'utilisation des deux techniques précédemment mentionnées permet de masquer, d'obfusquer, le fonctionnement réel du récepteur, et ce sans nécessiter de ressources supplémentaires de la part du récepteur et sans substantiellement ralentir le débit de transmission dans le réseau.

### 5.2.1. Procédé de transmission de données chiffrées

Dans ce mode de réalisation on utilise une clé différente à chaque session de communication entre l'émetteur et le récepteur.

Cette solution exige qu'un nonce soit choisi pour chaque session. Mais si le nonce est transmis avec le message (comme cela est fait habituellement), l'attaquant pourrait contrôler la transmission de ce nonce et forcer une réutilisation de celui-ci. En variante, le nonce pourrait être transmis par le récepteur, mais cela nécessiterait alors une communication bidirectionnelle. Or, le procédé de la présente technique n'est pas nécessairement mis en oeuvre dans le cadre d'une communication bidirectionnelle. Ainsi, pour résister à une attaque de type « rejeu » (réutilisation d'un nonce déjà utilisé par l'attaquant) on construit une entité réceptrice à état (« stateful » en anglais). À cette fin, il est par exemple possible d'utiliser des outils statistiques pour déterminer si un nonce est légitime ou s'il s'agit d'une tentative de tromper le récepteur. A ce titre, on peut par exemple mettre en oeuvre, au sein de le récepteur un mécanisme de type « SQF », (de l'anglais pour « Streaming Quotient Filter »). Selon la présente, un tel mécanisme est particulièrement bien adapté en ce qu'il permet de détecter efficacement les doublons dans un flux de données tout en ayant des exigences de mémoire restreinte. Un mécanisme de type filtre de Bloom est également une possibilité plus connue que SQF pour détecter des doublons. Mais ce mécanisme est moins intéressant dans l'application visée car il est généralement plus gourmand en termes de ressources.

On note que dans tous les cas, un attaquant à une probabilité de $2^{-l}$ de transmettre $l$ blocs à une entité réceptrice avant d'être détecté comme étant un attaquant.

Le procédé de transmission de données chiffrées, selon le mode de réalisation présentement décrit, comprend :

- une sélection, en fonction d'une clé de chiffrement $k$, parmi une pluralité de clé de chiffrement possible ; et

au moins une itération des étapes suivantes :

- obtention d'un bloc de données à chiffrer $A_i$ ;
- chiffrement, à l'aide de ladite clé de chiffrement k, dudit bloc de données à chiffrer $A_i$, délivrant un bloc de données chiffrées $C_i$ ;
- détermination, en fonction dudit bloc de données chiffrées $C_i$, d'au moins un tag $b_i$ ;
- transmission dudit bloc de données chiffrées $C_i$ et dudit au moins un tag $b_i$ ;

Bien entendu, en fonction des modes de réalisation, il est possible d'apporter quelques variantes au procédé précédemment décrit en respectant deux critères : le premier critère consiste à limiter au maximum le nombre de tags à transmettre en plus des données chiffrées; il est nécessaire de conserver un procédé de transmission de données chiffrées qui soit peu gourmand en énergie, et qui limite la quantité de données surnuméraire (i.e. données qui ne sont pas des données utiles) ; le deuxième critère est celui de la simplicité des traitements réalisés côté entité de réception : il faut conserver un traitement simple pour l'entité de réception afin d'assurer que la dépense d'énergie nécessaire à ce traitement soit minimale. On peut ainsi définir plusieurs variantes du schéma de transmission des tags $b_i$, afin de

rendre encore plus complexe la tâche de l'attaquant.

Ainsi, dans une première variante, les tags $b_i$ sont distribués (transmis) de manière aléatoire ou pseudo aléatoire ; cela signifie que pour un observateur extérieur, il n'est pas possible de deviner quand un tag $b_i$ doit être transmis. Autrement dit, cela signifie qu'il n'y a pas de prédictabilité dans la transmission des tags. Ainsi un bloc de donnée $C_i$ peut être suivi de la transmission d'un tag alors que le bloc suivant $C_{i+1}$ ne l'est pas. Cette transmission aléatoire ou pseudo aléatoire du tag est liée à la clé $k$, précédemment déterminée pour la session de transmission. Une opération réalisée sur la clé k, postérieurement à la transmission du bloc courant, permet de décider de la transmission d'un tag courant. Bien entendu, cette opération, réalisée sur la clé k, est secrète.

On introduit donc, avec cette variante, une variabilité de la valeur du tag et une variabilité de la présence du tag.

Dans une deuxième variante, la longueur de chaque tag est déterminée de manière aléatoire ou pseudo aléatoire ; cela signifie que pour un observateur extérieur, il n'est pas possible de deviner quelle doit être la longueur d'un tag $b_i$. Autrement dit, cela signifie qu'il n'y a pas de prédictabilité dans la longueur des tags. Ainsi, même si un tag est transmis après chaque bloc de données, la longueur de ce tag n'est pas prédictible. Ceci est également vrai, par extension, de la valeur du tag. Par exemple, un tag bi peut être de longueur de 1 bit : le tag peut alors prendre la valeur 0 ou la valeur 1. Le tag suivant peut être de longueur de deux bits : le tag peut alors prendre les valeurs '00' ou '01' ou '10' ou '11'. L'attaquant, n'étant pas en mesure de connaître la longueur du tag a donc encore plus de mal à deviner la valeur de celui-ci. Le calcul de cette longueur du tag est réalisé en mettant en oeuvre une fonction secrète basée sur la clé $k$.

Une troisième variante consiste en la combinaison de la première et de la deuxième variante.

Une quatrième variante consiste en la combinaison de la première et de la deuxième variante, avec l'adjonction d'une fonctionnalité supplémentaire : on suppose que la longueur standard d'un tag est de 1 bit. Dans cette quatrième variante, postérieurement au chiffrement d'un bloc $C_i$, on réalise les opérations suivantes, en mettant en oeuvre une fonction secrète dépendante de la clé $k$ :

- calcul de la présence d'un tag $b_i$ ;
- calcul de la longueur du tag $b_i$, en fonction du dernier tag transmis ;
- calcul de la valeur de chaque bit du tag $b_i$ en fonction des blocs $C_i$, (et $C_{i-1}$, $C_{i-2}$, etc.) précédemment chiffrés.

En d'autres termes, postérieurement au chiffrement d'un bloc Mi, une fonction, dépendante de la clé $k$, permet :

- de déterminer si un tag est transmis ou non ;

- de déterminer la longueur de ce tag en fonction de la longueur des tags précédemment transmis ;
- de déterminer la valeur des bits composants ce tag en fonction des blocs précédemment transmis.

Une telle implémentation ne signifie pas que le tag $b_i$ dépend de tous les tags précédents. Par exemple, si le tag $b_i$ précédemment transmis était de longueur 1 bit et dépendait du bloc $C_i$ (et des blocs précédents), le tag $b_{i+1}$, peut quant à lui, et en toute indépendance, être d'une longueur de deux bits, le premier bit dépendant du bloc $C_{i-1}$ (et des blocs précédents) et le deuxième bit dépendant du bloc $C_{i+1}$ (et des blocs précédents). L'avantage de ce mode de réalisation est que même si l'attaquant dispose de l'ensemble des valeurs unitaires (0 ou 1), correspondant à chaque bloc, l'attaquant ne peut pas deviner comment ces données seront transmises : en effet la distribution de ces valeurs étant aléatoire ou pseudo aléatoire et étant liée à une clé de session $k$, l'attaquant ne peut deviner quelle sera la distribution de celles-ci.

5.2.2. Procédé de réception de données chiffrées

Comme cela a été indiqué précédemment, un objectif de la présente technique est, outre le fait d'être peu gourmande en énergie, en bande passante et en mémoire consommée du côté récepteur, de pouvoir résister à des attaques par canaux cachés. On suppose en effet qu'un éventuel attaquant est à même d'avoir accès au dispositif récepteur des données et qu'il est à même d'observer le comportement de ce dispositif afin de déterminer les bonnes données à transmettre dans le cas d'une usurpation ou d'une attaque. On sait que les attaques par canaux cachés se basent sur l'observation de divers paramètres qui sont représentatifs d'un certain type d'activité. Dès lors afin de rendre cette observation très difficile, le procédé de réception des données chiffrées comprend, en plus des étapes de réception des données chiffrées C et du tag B, des étapes de masquage du traitement réalisé lors de la réception des données. Plus particulièrement, ces étapes de masquage sont simples et ne nécessitent pas de calculs complexes. En effet, il n'est pas souhaitable que le récepteur réalise des calculs trop intensifs qui auraient une influence négative sur son autonomie.

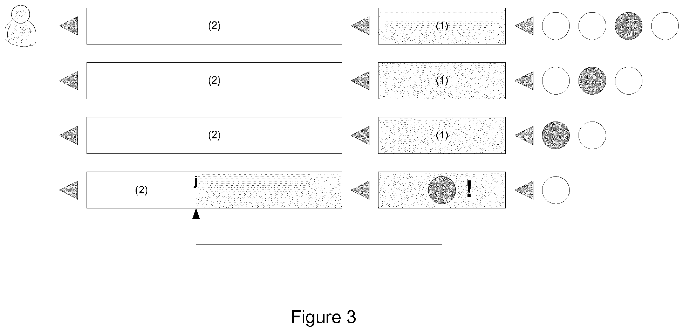

Ainsi, pour éviter d'accepter et de traiter des blocs de données malveillants tout en ajoutant une incertitude (vis à vis de l'attaquant) sur le bloc de données qui a provoqué l'arrêt (et donc en introduisant une incertitude sur le temps du traitement en tant que tel), on introduit (voir la figure 3) deux files d'attente FIFO, en mémoire vive : la file d'attente (1) (à droite sur le schéma) et la file d'attente (2) (à gauche sur la schéma).

Les blocs de données sont insérés dans la file d'attente (1) à mesure qu'ils arrivent. La file d'attente (1) comprend l'espace nécessaire à 128 blocs de données. La probabilité que l'adversaire a réussi à générer une séquence de 128 tags $b_i$ corrects et de $2^{-128}$; Ainsi, on considère que quand un bloc ($C_i$) de données quitte la file d'attente (1) (parce que celle-ci est pleine), il est valide avec une probabilité forte. Les blocs sortant de la file d'attente (1) sont introduits dans la file d'attente (2), qui est de taille $m$. Les paquets sortant de la file d'attente (2) sont ensuite utilisés (s'ils sont corrects).

Lorsqu'un bloc de données $C_i$, qui se trouve dans la file d'attente (1) est détecté comme étant incorrect (parce que le tag auquel ce bloc de données correspond est incorrect), on applique la procédure de traitement suivante :

- une position j, dans la file d'attente (2), est sélectionnée au hasard (par exemple selon une procédure décrite ci-dessous) ; la position $j$ est l'emplacement d'invalidation ;
- tous les blocs de données qui se trouvent après la position j dans la file d'attente (2) sont transmis pour traitement ;
- la communication est arrêtée.

En d'autres termes lorsque l'on détecte un bloc de données incorrect dans la file d'attente (1), on détermine un temps (matérialisé par l'emplacement d'invalidation $j$) à partir duquel, dans la file d'attente (2), les blocs de données précédemment transmis ne seront pas traités. Cette technique présente deux avantages : le premier tient au fait que l'on minimise le risque de prise en compte d'un bloc de données qui aurait pu « échapper » au traitement de contrôle des tags $b_i$. En effet, en abandonnant le traitement dans la file d'attente (2), on assure que même si un bloc de données de la file d'attente (1) a pu être pris, à tort, comme correct, il n'aura pas le temps d'être pris en compte pour traitement ultérieur. Le deuxième avantage, comme explicité précédemment, réside dans le fait que l'attaquant n'est pas en mesure de détecter quel est le tag (ou le bloc de données) qui a provoqué l'interruption de traitement. Dès lors, s'il souhaite effectuer un nouvel essai, l'attaquant doit se procurer la nouvelle clé de session d'une part et forger une nouvelle suite de blocs de données chiffrées et une nouvelle suite de tags d'autre part, sans assurance toutefois que ce nouvel essai conduira à un meilleur résultat.

Une question est posée sur la façon dont l'emplacement $j$ est sélectionné. Il est nécessaire, en effet, d'éviter que cet emplacement puisse être prédit par l'attaquant, faute de quoi, l'ensemble de la procédure serait inutile.

Deux variantes de sélection, au moins, peuvent être envisagées :

- la première variante consiste à sélectionner l'emplacement $j$ en fonction du message transmis; il s'agit d'une sélection déterministe, réalisée par le récepteur en fonction du contenu du message lui-même ;
- la deuxième variante consiste à sélectionner l'emplacement $j$ de façon aléatoire, selon une distribution donnée.

Sans entrer dans les détails mathématiques, qui ne sont pas l'objet de la présente, les inventeurs ont démontré qu'une sélection aléatoire, selon une distribution de probabilité uniforme était une manière efficace de sélectionner un emplacement *j*.

D'autres paramètres peuvent être efficacement ajustés, en fonction des modes de réalisation, pour accroître l'efficacité de du processus qui vient d'être décrit. Parmi ces paramètres, notamment, on peut ajuster :

- la taille m de la file d'attente (2) : plus la file d'attente est longue, plus le temps nécessaire à l'attaquant pour apprendre quel est le bloc de données ou le tag fautif (i.e. celui qui a permis de détecter l'attaque) ; la contrepartie étant une latence plus importante dans le traitement ;
- de la même manière, la taille de la file d'attente (1) peut être ajustée afin de diminuer les risques d'une introduction frauduleuse d'un bloc de données dans la file d'attente (2) ; cela a déjà été explicité précédemment;
- en corolaire, un paramètre important pour la détection se rapporte à la quantité de mémoire disponible pour effectuer les traitements de prise en compte au niveau du récepteur; plus la quantité de mémoire est importante et plus le niveau de sécurité est augmenté.

5.3. Autres caractéristiques et avantages

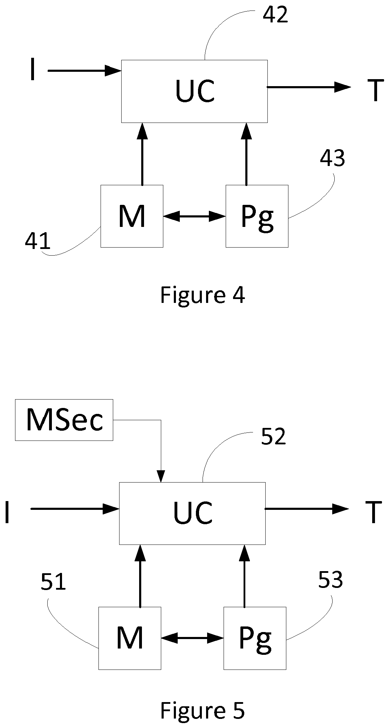

On décrit, en relation avec la figure 4, un dispositif émetteur mis en oeuvre pour transmettre des données chiffrées, selon le procédé décrit préalablement.

Par exemple, le dispositif émetteur comprend une mémoire 41 constituée d'une mémoire tampon, une unité de traitement 42, équipée par exemple d'un microprocesseur, et pilotée par le programme d'ordinateur 43, mettant en oeuvre un procédé de transmission de données chiffrées. À l'initialisation, les instructions de code du programme d'ordinateur 43 sont par exemple chargées dans une mémoire avant d'être exécutées par le processeur de l'unité de traitement 42. L'unité de traitement 42 reçoit en entrée au moins une donnée représentative d'un message M a transmettre à un récepteur. Le microprocesseur de l'unité de traitement 42 met en oeuvre les étapes du procédé de transmission, selon les instructions du programme d'ordinateur 43 pour découper le message en bloc de données, chiffrer chaque bloc de données à l'aide d'une clé de chiffrement *k* et calculer des tags *b* (représentatifs de signatures associées aux blocs de données chiffrées) et transmettre les blocs de données chiffrées et les tag *b* selon un schéma de transmission. Comme explicité, ce schéma de transmission peut être déterministe et dépendre de la clé de chiffrement.

Pour cela, le dispositif émetteur comprend, outre la mémoire tampon 41, des moyens de communications, tels que des modules de communication réseau, des moyens de transmission de données et éventuellement un processeur de chiffrement dédié.

L'ensemble de ces moyens peut se présenter sous la forme d'un processeur particulier implémenté au sein du dispositif, ledit processeur étant un processeur sécurisé. Selon un mode de réalisation particulier, ce dispositif émetteur met en oeuvre une application particulière qui est en charge de la réalisation du chiffrement et de la transmission de données, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le dispositif émetteur comprend en outre des moyens d'obtention de clé de chiffrement, selon un modèle à état (« stateful »), moyens qui permettent d'obtenir une nouvelle clé de chiffrement à chaque nouvelle session de transmission de données.

On décrit, en relation avec la figure 5, un dispositif récepteur mis en oeuvre pour recevoir des données chiffrées en provenance d'un dispositif émetteur, selon le procédé décrit préalablement.

Par exemple, le dispositif récepteur comprend une mémoire 51 comprenant d'une mémoire tampon, une unité de traitement 52, équipée par exemple d'un microprocesseur, et pilotée par le programme d'ordinateur 53, mettant en oeuvre un procédé de réception de données chiffrées,

À l'initialisation, les instructions de code du programme d'ordinateur 53 sont par exemple chargées dans une mémoire avant d'être exécutées par le processeur de l'unité de traitement 52. L'unité de traitement 52 reçoit en entrée au moins un bloc de données chiffrées et au moins un tag b, représentatif d'une signature de bloc de données chiffrées. Le microprocesseur de l'unité de traitement 52 met en oeuvre les étapes du procédé de réception, selon les instructions du programme d'ordinateur 53 pour contrôler la validité des tags reçus en fonction des blocs de données chiffrées et effectuer un traitement différentiel des données reçues en fonction de la validité de ces tags.

Pour cela, le dispositif comprend, outre la mémoire tampon 51, des moyens de communication, tels que des modules de communication réseau, des moyens de transmission de données et éventuellement un processeur de chiffrement indépendant.

L'ensemble de ces moyens peut se présenter sous la forme d'un processeur particulier implémenté au sein du dispositif récepteur, ledit processeur étant un processeur sécurisé et/ou faisant appel à une mémoire sécurisée (Msec). Selon un mode de réalisation particulier, ce dispositif met en oeuvre une application particulière qui est en charge de la réalisation de la réception et du contrôle des données reçues, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le dispositif récepteur comprend en outre des moyens d'obtention de clé de chiffrement, selon un modèle à état (« stateful »), moyens qui permettent d'obtenir une nouvelle clé de chiffrement à chaque nouvelle session de transmission de données.

En fonction des modes de réalisation, le dispositif récepteur comprend également des moyens de gestion d'au moins deux files d'attente de traitement des données reçues. Plus particulièrement, le dispositif récepteur peut comprendre une première mémoire physique, d'une taille prédéterminée, dans laquelle les blocs de données chiffrées sont insérés pendant (ou après) la vérification de la validité des tags qui accompagnent ces blocs de données chiffrées. Le dispositif récepteur peut également comprendre une deuxième mémoire physique, d'une taille prédéterminée, dans laquelle les blocs de données chiffrées (ou déchiffrées) sont insérés postérieurement au traitement de vérification de la validité des tags. Les deux files d'attentes meuvent également être créées dans la mémoire sécurisée (Msec) du dispositif récepteur lorsque celui-ci en est muni. Cela permet de rendre encore plus complexe la tâche d'interception des données et celle de compréhension du fonctionnement du dispositif récepteur.

## Revendications

1. Procédé de transmission de données, procédé mis en oeuvre par un premier dispositif électronique, dit émetteur, à destination d'un deuxième dispositif électronique dit récepteur, procédé comprenant la transmission d'un message découpé en blocs de données $(A_1,...,A_n)$ procédé **caractérisé en ce qu'**il comprend au moins une itération d'une étape de traitement (20) comprenant :

    - obtention (20-1) d'un bloc de données courant $A_i$;
    - chiffrement (20-2) dudit bloc de données courant $A_i$ à l'aide d'une clé de chiffrement k, délivrant un bloc de données chiffrées $C_i$;
    - détermination (20-3) d'un tag $b_i$ de longueur aléatoire ou pseudo aléatoire en fonction dudit bloc de données chiffrées $C_i$, la longueur du tag $b_i$ étant obtenue par la mise en oeuvre d'une fonction secrète basée sur la clé de chiffrement $k$ ;
    - transmission (20-4) dudit bloc de données chiffrées $C_i$;
    et **en ce qu'**il comprend au moins une étape de transmission d'au moins un tag $b_i$ selon un schéma de transmission prédéterminé.

2. procédé de transmission selon la revendication 1, **caractérisé en ce que** l'étape de transmission (20-5) d'au moins un tag $b_i$ est effectuée à chaque itération de l'étape de traitement (20).

3. Procédé de transmission selon la revendication 1, **caractérisé en ce que** la taille dudit tag $b_i$ est comprise entre 1 bit et 8 bits.

4. Procédé de transmission selon la revendication 1, **caractérisé en ce que** ledit procédé de transmission comprend, précédemment à l'étape de traitement (20), une étape d'obtention (10) de la clé de chiffrement k, dite clé de session.

5. Procédé de réception de données, représentatives d'un message découpé en blocs de données $(A_1,...,A_n)$, procédé mis en oeuvre par un dispositif électronique dit dispositif récepteur, procédé **caractérisé en ce qu'**il comprend au moins une itération des étapes suivantes :

    - une étape de réception (R20-1) d'un bloc de données chiffrées $C_i$ correspondant à un bloc de données $A_i$ du message chiffré à l'aide d'une clé de chiffrement $k$ ;
    - une étape de réception (R20-2) d'un tag $b_i$ correspondant à une signature dudit bloc de données chiffrées $C_i$, ledit tag $b_i$ ayant une longueur aléatoire ou pseudo aléatoire obtenue par la mise en oeuvre d'une fonction secrète basée sur la clé de chiffrement $k$;
    - une étape de vérification (R20-3) d'une validité dudit tag $b_i$ reçu au regard d'un tag $b_{iA}$ attendu ; et
    - lorsque ledit tag $b_i$ reçu est différent dudit tag $b_{iA}$ attendu, une étape de traitement différentiel (R20-4) d'au moins un bloc de données chiffrées valide précédemment reçu.

6. Procédé de réception de données selon la revendication 5, **caractérisé en ce que** ladite étape de réception (R20-1) d'un bloc de données chiffrées $C_i$ comprend une étape d'insertion dudit données chiffrées $C_i$ dans une première file d'attente (1) de taille prédéterminée.

7. Procédé de réception de données selon la revendication 5, **caractérisé en ce que** ladite étape de traitement différentiel (R20-4) d'au moins un bloc de données chiffrées valide précédemment reçu comprend :

    - une étape de détermination d'un emplacement d'invalidation j, au sein d'une deuxième fille d'attente (2) ;
    - au moins une étape de traitement des données insérées dans la deuxième file d'attente (2) jusqu'à l'emplacement d'invalidation j ;
- une étape d'arrêt du traitement.

8. Dispositif électronique de transmission de données, dit émetteur, comprenant des moyens de transmission de données à destination d'un deuxième dispositif électronique dit récepteur, dispositif comprenant des moyens de transmission d'un message découpé en blocs de données $(A_1,...,A_n)$ dispositif **caractérisé en ce qu'**il comprend des moyens de traitement itératifs comprenant :

- des moyens d'obtention (20-1) d'un bloc de données courant $A_i$;
- des moyens de chiffrement (20-2) dudit bloc de données courant $A_i$ à l'aide d'une clé de chiffrement $k$, délivrant un bloc de données chiffrées $C_i$;
- des moyens de détermination (20-3) d'un tag $b_i$ de longueur aléatoire ou pseudo aléatoire en fonction dudit bloc de données chiffrées $C_i$, la longueur du tag $b_i$ étant obtenue par la mise en oeuvre d'une fonction secrète basée sur la clé de chiffrement $k$ ;
- des moyens de transmission (20-4) dudit bloc de données chiffrées $C_i$;

et **en ce qu'**il comprend des moyens de transmission d'au moins un tag $b_i$ selon un schéma de transmission prédéterminé.

9. Dispositif électronique de réception de données lesdites données étant représentatives d'un message découpé en blocs de données $(A_1,...,A_n)$, procédé mis en oeuvre par un dispositif électronique dit dispositif récepteur, dispositif **caractérisé en ce qu'**il comprend des moyens de traitement itératifs comprenant :

- des moyens de réception d'un bloc de données chiffrées $C_i$, correspondant à un bloc de données $A_i$ du message chiffré à l'aide d'une clé de chiffrement k,;
- des moyens de réception d'un tag $b_i$ correspondant à une signature dudit bloc de données chiffrées $C_i$, ledit tag $b_i$ ayant une longueur aléatoire ou pseudo aléatoire obtenue par la mise en oeuvre d'une fonction secrète basée sur la clé de chiffrement $k$ ;
- des moyens de vérification d'une validité dudit tag $b_i$ reçu au regard d'un tag $b_{iA}$ attendu ; et
- des moyens de traitement différentiel d'au moins un bloc de données chiffrées valide précédemment reçu, mis en oeuvre lorsque ledit tag $b_i$ reçu est différent dudit tag $b_{iA}$ attendu.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de transmission de données selon la revendication 1 ou 5, lorsqu'il est exécuté sur un ordinateur.

**Patentansprüche**

1. Datenübertragungsverfahren, Verfahren, das von einer ersten elektronischen Vorrichtung, die Sender genannt wird, zu einer zweiten elektronische Vorrichtungen, die Empfänger genannt wird, umgesetzt wird, Verfahren, das das Übertragen einer Nachricht, die in Datenblöcke $(A_1, ..., A_n)$ unterteilt wird, aufweist, Verfahren, **dadurch gekennzeichnet, dass** es mindestens ein Wiederholen eines Verarbeitungsschritts (20) aufweist, umfassend:

- Erhalten (20-1) eines aktuellen Datenblocks $A_i$,
- Verschlüsseln (20-2) des aktuellen Datenblocks $A_i$ mittels eines Verschlüsselungschlüssels $k$, der einen Block von verschlüsselten Daten $C_i$ bereitstellt,
- Bestimmen (20-3) eines Tags $b_i$ von zufälliger oder pseudozufälliger Länge in Abhängigkeit von dem Block von verschlüsselten Daten $C_i$, wobei die Länge des Tags $b_i$ durch das Umzusetzen einer geheimen Funktion erhalten wird, die auf dem Verschlüsselungschlüssel $k$ beruht,
- Übertragen (20-4) des Blocks von verschlüsselten Daten $C_i$

und **dadurch gekennzeichnet, dass** es mindestens einen Schritt des Übertragens von mindestens einem Tag $b_i$ nach einem vorbestimmten Übertragungsschema aufweist.

2. Übertragungsverfahren nach Anspruch 1, **dadurch gekennzeichnet, dass** der Schritt des Übertragens (20-5) von mindestens einem Tag $b_i$ bei jedem Wiederholen des Verarbeitungsschritts (20) ausgeführt wird.

3. Übertragungsverfahren nach Anspruch 1, **dadurch gekennzeichnet, dass** die Größe des Tags $b_i$ zwischen 1 Bit und 8 Bit beträgt.

4. Übertragungsverfahren nach Anspruch 1, **dadurch gekennzeichnet, dass** das Übertragungsverfahren vor dem Verarbeitungsschritt (20) einen Schritt des Erhaltens (10) des Verschlüsselungschlüssels k, der Sitzungsschlüssel genannt wird, aufweist.

5. Verfahren zum Empfangen von Daten, die für eine Nachricht, die in Datenblöcke $(A_1, ..., A_n)$ unterteilt wird, repräsentativ sind, Verfahren, das von einer elektronischen Vorrichtung, die Empfänger genannt wird, umgesetzt wird, Verfahren, **dadurch gekennzeichnet, dass** es mindestens ein Wiederholen der folgenden Schritte aufweist:

- einen Schritt des Empfangens (R20-1) von einem Block von verschlüsselten Daten $C_i$, der einem Datenblock $A_i$ der Nachricht entspricht, die mittels eines Verschlüsselungschlüssels k verschlüsselt wird,
- einen Schritt des Empfangens (R20-2) eines Tags $b_i$, das einer Signatur des Blocks von verschlüsselten Daten $C_i$ entspricht, wobei das Tag $b_i$ eine zufällige oder pseudozufällige Länge aufweist, die durch das Umzusetzen einer geheimen Funktion erhalten wird, die auf dem Verschlüsselungschlüssel k beruht,
- einen Schritt des Überprüfens (R20-3) der Gültigkeit des empfangenen Tags $b_i$ in Bezug auf ein erwartetes Tag $b_{iA}$ und,
- wenn das empfangene Tag $b_i$ von dem erwarteten Tag $b_{iA}$ verschieden ist, einen Schritt des differentiellen Verarbeitens (R20-4) von mindestens einem vorher empfangenen, gültigen Block von verschlüsselten Daten.

6. Verfahren zum Empfangen von Daten nach Anspruch 5, **dadurch gekennzeichnet, dass** der Schritt des Empfangens (R20-1) eines Blocks von verschlüsselten Daten $C_i$ einen Schritt des Einfügens der verschlüsselten Daten $C_i$ in eine erste Warteschlange (1) mit einer vorbestimmter Größe aufweist.

7. Verfahren zum Empfangen von Daten nach Anspruch 5, **dadurch gekennzeichnet, dass** der Schritt des differentiellen Verarbeitens (R20-4) von mindestens einem vorher empfangenen, gültigen Block von verschlüsselten Daten aufweist:

- einen Schritt des Bestimmens einer Deaktivierungsstelle j in einer zweiten Warteschlange (2),
- mindestens einen Schritt des Verarbeitens der Daten, die in die zweite Warteschlange (2) eingefügt werden, bis zu der Deaktivierungsstelle j,
- einen Beendigungsschritt des Verarbeitens.

8. Elektronische Vorrichtung zum Datenübertragen, die Sender genannt wird, die Mittel zum Übertragen von Daten an eine zweite elektronische Vorrichtung, die Empfänger genannt wird, aufweist, Vorrichtung, umfassend Mittel zum Übertragen einer Nachricht, die in Datenblöcke ($A_1$, ..., $A_n$) unterteilt ist, Vorrichtung, **dadurch gekennzeichnet, dass** sie iterative Verarbeitungsmittel aufweist, umfassend:

- Mittel zum Erhalten (20-1) eines aktuellen Datenblocks $A_i$,

- Mittel zum Verschlüsseln (20-2) des aktuellen Datenblocks $A_i$ mittels eines Verschlüsselungschlüssels k, der einen Block von verschlüsselten Daten $C_i$ bereitstellt,
- Mittel zum Bestimmen (20-3) eines Tags $b_i$ von zufälliger oder pseudozufälliger Länge in Abhängigkeit von dem Block von verschlüsselten Daten $C_i$, wobei die Länge des Tags $b_i$ durch das Umzusetzen einer geheimen Funktion erhalten wird, die auf dem Verschlüsselungschlüssel k beruht,
- Mittel zum Übertragen (20-4) des Blocks von verschlüsselten Daten $C_i$

und **dadurch gekennzeichnet, dass** sie einen Schritt des Übertragens von mindestens einem Tag $b_i$ nach einem vorbestimmten Übertragungsschema aufweist.

9. Elektronische Vorrichtung zum Empfangen von Daten, wobei die Daten für eine Nachricht, die in Datenblöcke ($A_1$, ..., $A_n$) unterteilt ist, repräsentativ sind, Verfahren, das von einer elektronischen Vorrichtung, die Empfänger genannt wird, umgesetzt wird, Vorrichtung, **dadurch gekennzeichnet, dass** sie iterative Verarbeitungsmittel aufweist:

- Mittel zum Empfangen von einem Block von verschlüsselten Daten $C_i$, der einem Datenblock $A_i$ der Nachricht entspricht, die mittels eines Verschlüsselungschlüssels k verschlüsselt wird,
- Mittel zum Empfangen eines Tags $b_i$, das einer Signatur des Blocks von verschlüsselten Daten $C_i$ entspricht, wobei das Tag $b_i$ eine zufällige oder pseudozufällige Länge aufweist, die durch das Umzusetzen einer geheimen Funktion erhalten wird, die auf dem Verschlüsselungschlüssel k beruht,
- Mittel zum Überprüfen einer Gültigkeit des empfangenen Tags $b_i$ in Bezug auf ein erwartetes Tag $b_{iA}$ und,
- Mittel zum differentiellen Verarbeiten von mindestens einem vorher empfangenen, gültigen Block von verschlüsselten Daten, das umgesetzt wird, wenn das empfangene Tag $b_i$ von dem erwarteten Tag $b_{iA}$ verschieden ist.

10. Computerprogrammprodukt, das von einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Programmcodeanweisungen zum Ausführen eines Datenübertragungsverfahrens nach Anspruch 1 oder 5 aufweist, wenn es auf einem Computer ausgeführt wird.

## Claims

1. Method for transmitting data implemented by a first electronic device, called a transmitter, to a second electronic device called a receiver, method comprising the transmission of a message subdivided into blocks of data $(A_1,...,A_n)$, the method being **characterized in that** it comprises at least one iteration of a processing step (20) comprising:

   - the obtaining (20-1) of a block of current data $A_i$;
   - the encryption (20-2) of said block of current data $A_i$, by means of an encryption key $k$, delivering a block of encrypted data $C_i$;
   - the determining (20-4) of a tag $b_i$ whose length is determined randomly or pseudo-randomly as a function of said block of encrypted data $C_i$, the length of the tag $b_i$ being determined by implementing a secret function based on the encryption key $k$;
   - the transmission (20-4) of said block of encrypted data $C_i$;

   and **in that** it comprises at least one step of transmitting at least one tag $b_i$ according to a predetermined transmission scheme.

2. Method for transmitting according to claim 1, **characterized in that** the transmitting (20-5) of at least one tag $b_i$ is performed at each iteration of the processing step (20).

3. Method for transmitting according to claim 1, **characterized in that** the size of said tag $b_i$ is from 1 bit to 8 bits.

4. Method for transmitting according to claim 1, **characterized in that** said method for transmitting comprises, prior to the processing step (20), a step (10) of obtaining an encryption key $k$, called a session key.

5. Method for receiving data representing a message subdivided into blocks of data $(A_1,...,A_n)$, method implemented by an electronic device called a receiver device, method **characterized in that** it comprises at least one iteration of the following steps:

   - a step (R20-1) for receiving a block of encrypted data $C_i$ corresponding to a block of data $A_i$ of the message encrypted by means of an encryption key $k$;
   - a step (R20-2) for receiving a tag $b_i$ corresponding to a signature of said block of encrypted data $C_i$, said tag having a length determined randomly or pseudo-randomly by implementing a secret function based on the encryption key $k$;
   - a step (R20-3) for verifying a validity of said received tag $b_i$ relative to an expected tag $b_{iA}$;

   and
   - when said received tag $b_i$ is different from said expected tag $b_{iA}$, a step (R20-4) for the differential processing of at least one previously received valid block of encrypted data.

6. Method for receiving data according to claim 5, **characterized in that** said step (R20-1) for receiving a block of encrypted data $C_i$ comprises a step of insertion of said block of encrypted data $C_i$ into a first queue (1) of a predetermined size.

7. Method for receiving data according to claim 5, **characterized in that** said step for the differential processing (R20-4) of at least one previously received valid block of encrypted data comprises:

   - a step for determining a location of invalidation j, within a second queue (2);
   - at least one step for processing data inserted into the second queue (2) up to the location of invalidation j;
   - a step for stopping the processing.

8. Electronic data transmission device, called a transmitter, comprising means for transmitting data to a second electronic device called a receiver, said transmitter comprising means for transmitting a message subdivided into blocks of data $(A_1,...,A_n)$ and **characterized in that** it comprises iterative processing means comprising:

   - means (20-1) for obtaining a block of current data $A_i$;
   - means (20-2) for encrypting said block of current data $A_i$, by means of an encryption key $k$, delivering a block of encrypted data $C_i$;
   - means (20-3) for determining a tag $b_i$ whose length is determined randomly or pseudo-randomly as a function of said block of encrypted data $C_i$, the length of the tag $b_i$ being determined by implementing a secret function based on the encryption key $k$;;
   - means (20-4) for transmitting said block of encrypted data $C_i$;

   and **in that** it comprises means for transmitting at least one tag $b_i$ according to the predetermined transmission scheme.

9. Electronic device for receiving data, said data representing a message subdivided into blocks of data $(A_1,...,A_n)$,, said receiving device being **characterized in that** it comprises iterative processing means comprising:

   - means for receiving a block of encrypted data $C_i$ corresponding to a block of data $A_i$ of the mes-

sage encrypted by means of an encryption key $k$;
- means for receiving a tag $b_i$ corresponding to a signature of said block of encrypted data $C_i$, said tag having a length determined randomly or pseudo-randomly by implementing a secret function based on the encryption key k;
- means for verifying a validity of said received tag $b_i$ relative to an expected tag $b_{iA}$; and
- means of differential processing of at least one previously received valid block of encrypted data, implemented when said received tag $b_i$ is different from said expected tag.

10. Computer program product downloadable from a communications network and/or stored on a computer-readable carrier and/or executable by a microprocessor, **characterized in that** it comprises program code instructions for executing a method for transmitting data according to claim 1, when it is executed on a computer.

Figure 1

Figure 2

Figure 3

Figure 4

Figure 5

## RÉFÉRENCES CITÉES DANS LA DESCRIPTION

**Documents brevets cités dans la description**

- US 20100293097 A1
- US 5852665 A